# FASCICULE DE BREVET EUROPEEN

(11) **EP 1 527 911 B1**
(45) Date de publication et mention de la délivrance du brevet: **17.09.2008**
(21) Numéro de dépôt: 04292498.5
(22) Date de dépôt: 21.10.2004
(51) Int. Cl.: B60G 7/00, B60G 21/05

(54) **Train arrière semi-déformable à souplesse longitudinale**
Teilweise verformbare Hinterachse mit Flexibilität in Längsrichtung
Semi-deformable rear suspension with longitudinal flexibility

(30) Priorité: 28.10.2003 FR 0312596
(43) Date de publication de la demande: 04.05.2005
(73) Titulaire: Peugeot Citroën Automobiles S.A., 78140 Vélizy Villacoublay (FR)
(72) Inventeur: Toupet, Sébastien, 75016 Paris (FR)

(56) Documents cités:
- EP-A- 1 288 028
- EP-A- 1 361 084
- DE-A- 2 311 480
- FR-A- 1 096 872
- US-B1- 6 173 977
- PATENT ABSTRACTS OF JAPAN vol. 0061, no. 26 (M-142), 10 juillet 1982 (1982-07-10) & JP 57 051507 A (MAZDA MOTOR CORP), 26 mars 1982 (1982-03-26)

## Description

L'invention concerne un train arrière de véhicule automobile comprenant une fusée de roue, ce train arrière incluant une liaison flexible autorisant un mouvement de rotation de la fusée de roue autour d'un axe de rotation distinct de l'axe de roue, cette liaison flexible comprenant au moins deux plaques flexibles sensiblement planes contenues dans deux plans distincts dont l'intersection coïncide avec l'axe de rotation.

Dans un train de véhicule automobile, la roue est principalement libre de se déplacer verticalement pour amortir les irrégularités du sol. La possibilité de rotation de la fusée autour d'un axe distinct de celui de la roue est un degré de liberté supplémentaire, prévu pour améliorer le comportement routier et le confort du véhicule.

Le document FR-A-1096872 montre un train arrière avec tel degré de liberté supplémentaire.

L'invention concerne plus particulièrement l'adjonction d'un tel degré de liberté supplémentaire à un train du type semi-déformable. En comparaison avec les trains multibras, les trains semi-déformables offrent des performances intéressantes tout en ayant un encombrement beaucoup plus faible, de sorte qu'ils sont de plus en plus répandus. Cependant, le développement de ces trains semi-déformables étant relativement récent, des améliorations sont nécessaires pour rendre leurs performances comparables à celles des trains multibras.

Dans un train arrière multibras connu de la demande de brevet EP1288028, quatre bras relient la fusée de roue au véhicule en formant sensiblement deux parallélogrammes déformables. Les deux bras situés en position basse sont des lames dimensionnées pour avoir une certaine flexibilité pour offrir le degré de liberté supplémentaire à la roue. Ce degré de liberté supplémentaire est principalement un mouvement de rotation de la fusée de roue autour d'un axe de rotation qui est distinct de l'axe de la roue. Dans ce train arrière connu, les lames constituant les bras inférieurs sont sensiblement parallèles l'une à l'autre tout en étant inscrites dans deux plans formant un angle l'un par rapport à l'autre. Lorsque les efforts appliqués à la roue sollicitent ces lames en flexion, leur déformation conduit à un mouvement qui correspond sensiblement à une rotation de la fusée de roue autour d'un axe dont la position est définie par l'intersection des deux plans dans lesquels sont inscrites les deux lames.

On entend ainsi par degré de liberté supplémentaire la possibilité pour la fusée de roue de se déplacer lorsque des efforts sont appliqués à la roue, cette fusée revenant à une position de référence lorsqu'aucun effort n'est appliqué à la roue.

Le but de l'invention est de proposer une conception de train arrière semi-déformable présentant ce degré de liberté supplémentaire, tout en étant d'une conception simple permettant sa production à faible coût.

A cet effet, l'invention a pour objet un train arrière de véhicule automobile comprenant une fusée de roue, ce train arrière incluant une liaison flexible autorisant un mouvement de rotation de la fusée de roue autour d'un axe de rotation distinct de l'axe de roue, cette liaison flexible comprenant au moins deux plaques flexibles sensiblement planes contenues dans deux plans distincts dont l'intersection coïncide avec l'axe de rotation, **caractérisé en ce qu**'il comprend un bras oscillant, la fusée de roue étant fixée au bras oscillant par cette liaison flexible, chaque plaque flexible ayant un premier bord rigidement fixé au bras oscillant et un second bord rigidement fixé à la fusée de roue et dans lequel les plaques flexibles sont orientées de telle sorte que l'axe de rotation de la liaison flexible soit situé au niveau du sol ou sous le sol en étant orienté selon une direction transversale.

Le mouvement de rotation est introduit par une liaison flexible située entre le bras et la fusée de roue, de sorte que les paramètres tels que la rigidité de cette liaison peuvent être ajustés sans modifier les autres paramètres du train arrière. La flexibilité du bras oscillant en lui-même n'a pas à être modifiée pour procurer ce degré de liberté supplémentaire.

La liaison a un comportement flexible pour les sollicitations appliquées en partie supérieure de la roue, et elle a un comportement plus rigide en réaction à des efforts appliqués en bas de roue. Ainsi, la roue recule de façon significative lors du franchissement d'un obstacle de hauteur importante, mais elle recule très peu lors du freinage du véhicule.

Selon un mode de réalisation préféré, la liaison flexible comprend plusieurs plaques flexibles espacées le long du bras oscillant ayant chacune un premier bord rigidement fixé au bras oscillant et un second bord rigidement fixé à la fusée de roue, et ces plaques flexibles sont disposées l'une par rapport à l'autre de manière à définir un V ouvert vers le haut. La liaison flexible peut ainsi être réalisée à partir d'éléments de tôle classiques pour que son coût soit réduit. Le dimensionnement de l'épaisseur de chaque plaque permet d'ajuster très simplement la flexibilité de la liaison. Ces plaques flexibles peuvent être fixées par soudage au bras oscillant de façon à réduire le coût de cette liaison flexible.

Dans un autre mode de réalisation préféré, la liaison flexible comprend une tôle sensiblement rectangulaire ayant deux côtés pliés à angle droit, cette tôle pliée définissant un fond trapézoïdal auquel est fixée la fusée de roue, les deux côtés pliés définissant chacun une plaque flexible, chaque plaque flexible ayant son premier bord fixé au bras oscillant. Le nombre de pièces de la liaison est réduit, ce qui en diminue encore le coût de fabrication. Plusieurs tôles pliées peuvent être superposées pour rigidifier la liaison sans pénaliser son encombrement.

Avantageusement, la fusée de roue est fixée au fond de l'une des plaques par plusieurs vis. La fixation de la fusée de roue au châssis reste classique, de sorte qu'elle ne nécessite pas de modification importante de l'unité de production.

L'invention sera maintenant décrite plus en détail, en référence aux dessins annexés qui en illustrent une forme de réalisation à titre d'exemple non limitatif.
La figure 1 est un premier schéma de principe du train arrière selon l'invention ;
La figure 2 est un deuxième schéma de principe du train arrière selon l'invention ;
La figure 3 est un schéma de principe de la liaison flexible du train arrière selon l'invention ;
La figure 4 est une vue en perspective du train arrière selon l'invention ;
La figure 5 est une vue en perspective d'une variante du train arrière selon l'invention.

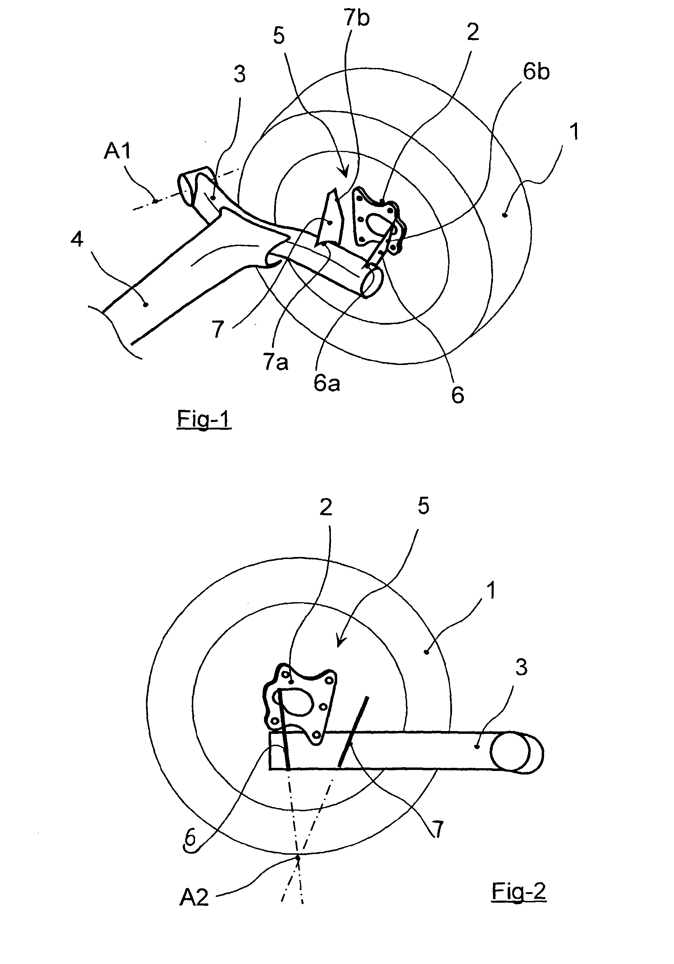

Figure 1, une roue 1 est montée rotative sur une fusée de roue qui est ici représentée schématiquement par une plaque de fixation 2 de cette fusée. Cette plaque 2 est liée à une extrémité d'un bras oscillant 3 qui est relié à un second bras oscillant non représenté par une traverse 4 pour constituer un train arrière du type à traverse déformable. Un système d'amortissement non représenté a une extrémité en appui sur la caisse du véhicule et son autre extrémité en appui sur le bras oscillant 3 pour assurer un effet de suspension. La roue 1 est ainsi maintenue plaquée sur le sol par l'intermédiaire du bras oscillant 3 qui pivote autour d'un axe A1 pour assurer un débattement vertical de cette roue 1.

Selon l'invention, la fusée de roue 2 est fixée au bras oscillant 3 par une liaison flexible 5. Cette liaison flexible autorise un degré de liberté supplémentaire de la roue 1, qui est une possibilité de rotation de la fusée de roue 2 autour d'un axe de rotation distinct de l'axe de la roue 1. La liaison est formée par deux plaques flexibles 6 et 7 qui sont contenues dans deux plans distincts dont l'intersection coïncide avec cet axe de rotation. Chaque plaque flexible a un premier bord 6a, 7a rigidement fixé au bras oscillant et un second bord 6b, 7b qui est rigidement fixé à la fusée de roue 2. Ce degré supplémentaire de liberté est donné seulement par la liaison flexible 5 située entre la fusée de roue et le bras oscillant 3, de sorte que cette liaison peut être dimensionnée spécifiquement pour avoir une élasticité souhaitée, sans altérer les autres caractéristiques du train arrière.

Le degré de liberté supplémentaire qui est introduit par cette liaison flexible 5 sera détaillé plus bas, il correspond à une élasticité longitudinale permettant à la roue 1 de reculer le long du véhicule. Cette possibilité de recul facilite le passage d'obstacles de hauteur importante : lorsqu'un tel obstacle entre en contact avec la roue 1, il génère un effort de percussion sur cette roue, mais cet effort de percussion est atténué par le recul de la roue pour améliorer le confort du véhicule. Lorsque cet effort s'annule, la roue revient vers une position de référence, du fait de la flexibilité de la liaison 5.

Avantageusement, la liaison flexible 5 est agencée pour que l'axe de rotation de la fusée de roue soit situé sensiblement sous le sol, voire au niveau du point de contact de la roue 1 avec le sol. Cet axe de rotation de la fusée de roue, qui est repéré par A2 sur la figure 2, est orienté selon une direction approximativement transversale en étant avantageusement sensiblement parallèle à l'axe de rotation de la roue, de telle sorte qu'il permet un recul de la roue selon un mouvement sensiblement pendulaire inscrit dans un plan longitudinal du véhicule. Cette position particulière de l'axe A2 procure au degré de liberté supplémentaire une flexibilité qui diffère selon qu'un effort est appliqué en partie supérieure ou en partie basse de la roue 1. Pour le cas du franchissement d'un obstacle, un effort est appliqué sensiblement à mi-hauteur de la roue, c'est-à-dire à une distance importante de l'axe A2, de telle sorte que la roue 1 recule sous l'effet d'un tel effort. En cas de freinage du véhicule, un effort est appliqué par le sol à la base de la roue 1, à savoir dans une zone qui coïncide sensiblement avec l'axe A2, de sorte que dans ce cas, la roue 1 ne recule pas ou très peu, ce qui correspond alors à un comportement rigide de la liaison. Le confort du véhicule en est significativement amélioré car le passage d'obstacle est facilité par le recul de la roue, mais sans que le comportement routier du véhicule n'en soit modifié puisque les efforts appliqués par le sol à la roue tels qu'un effort de freinage ne sollicitent pas le degré de liberté supplémentaire de la roue. Dans le cas d'un véhicule muni d'un système de freinage équipé d'un ABS, le fait que la roue arrière ne recule pas lors du freinage permet de ne pas perturber le fonctionnement de l'ABS.

Avantageusement, la liaison flexible 5 est formée par plusieurs plaques flexibles 6 et 7 qui relient chacune le bras oscillant 3 à la fusée de roue 2 en étant orientées transversalement par rapport au bras oscillant 3 et espacées le long de ce bras oscillant. Comme visible figure 2, ces plaques flexibles ont une orientation formant un certain angle l'une par rapport à l'autre de manière à définir un V ouvert vers le haut. L'orientation de ces plaques flexibles 6 et 7 définit la position de l'axe A2, cette position étant donnée par l'intersection des plans dans lesquels sont contenues les plaques 6 et 7, comme représenté schématiquement sur la figure 2. Ainsi, la position de l'axe de rotation A2 est définie par l'angle formé par deux plaques flexibles successives le long du bras oscillant. Plus cet angle est fermé, plus l'axe de rotation est situé vers le bas, plus cet angle est ouvert, plus l'axe de rotation est situé à proximité de l'axe de la roue 1.

Plus particulièrement, lorsqu'un effort dirigé vers l'arrière du véhicule est appliqué par exemple à mi-hauteur de la roue 1, les plaques flexibles 6 et 7 se déforment de façon élastique, leurs bords 6a, 6b, 7a et 7b restant solidaires du bras oscillant 3 et de la fusée 2. Les déformations subies par les plaques lorsqu'un effort est appliqué à la roue sont principalement des déformations de flexion, qui donnent lieu à un mouvement relatif de la fusée par rapport au bras oscillant. Ce déplacement de la fusée 2 correspond à une rotation de celle-ci autour de l'axe A2 de la liaison flexible 5 qui coïncide avec l'intersection des plans dans lesquels sont situées les plaques flexibles 6 et 7 de la liaison 5. La position de l'axe A2 représentée figure 2 peut se déplacer au cours de ce mouvement, mais dans des proportions faibles. En fait, des essais et simulations montrent que le comportement de la liaison flexible 5 correspond sensiblement à un mouvement de rotation autour de l'axe A2. La liaison flexible 5 peut ainsi être réalisée à partir d'éléments de tôle classiques pour former les plaques flexibles 6 et 7, ce qui lui confère un coût de fabrication très bas. Le dimensionnement de l'épaisseur de chaque plaque flexible ainsi que le nombre de plaques permettent d'ajuster la rigidité de la liaison. A titre indicatif, les plaques pourront avoir une épaisseur comprise entre deux et quatre millimètres, préférentiellement de trois millimètres.

Avantageusement, les plaques flexibles ont chacune leur premier bord 6a, 7a qui est directement soudé au bras oscillant 3. Le coût de mise en oeuvre de la liaison est ainsi réduit puisque celle-ci est implantée sur le bras oscillant 3 comme les autres éléments de celui-ci, par soudage, ce qui n'implique pas de modification importante de l'unité de production.

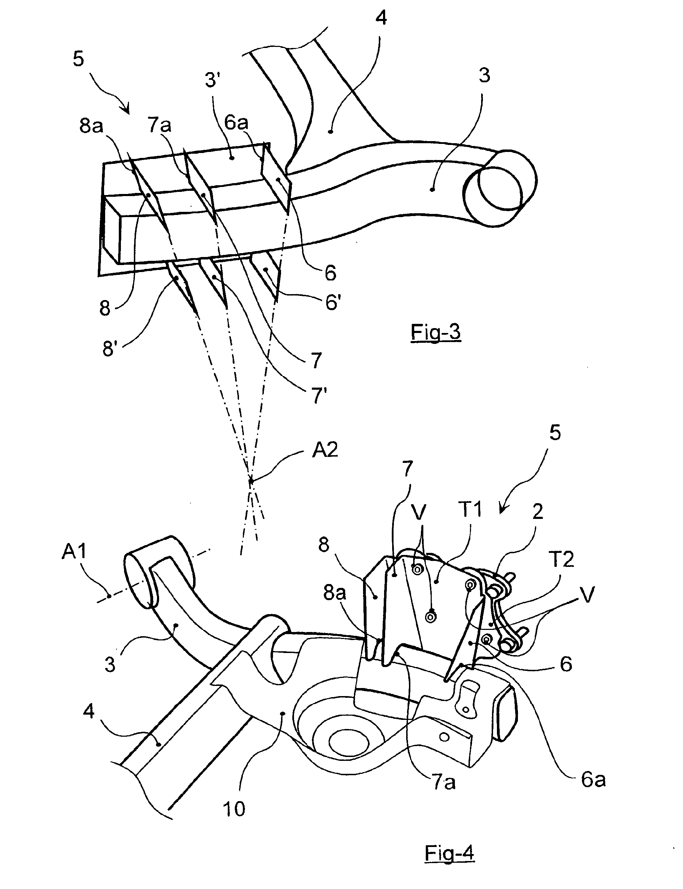

Dans l'exemple des figures 1 et 2, la liaison 5 est formée par deux plaques flexibles, mais elle peut en comporter plus, comme dans l'exemple de réalisation qui est illustré sur la figure 3. Dans cet autre exemple, la liaison est principalement formée par six plaques flexibles qui sont rigidement fixées à un support 3' solidaire du bras oscillant 3. Ces six plaques flexibles sont agencées par paires repérées respectivement par 6, 6', 7, 7', 8, 8'. Les deux plaques d'une même paire sont situées de part et d'autre du bras oscillant 3 en étant coplanaires, et en ayant chacune un bord soudé au support 3'. Les paires de plaques 6, 6' et 7, 7' forment un angle et définissent la position de l'axe A2, la troisième paire de plaques 8, 8' est orientée de telle sorte qu'elle est située dans un plan passant par l'axe A2. Le nombre de plaques flexibles peut encore être augmenté pour rigidifier la liaison 5, ces plaques flexibles devant être disposées de telle sorte qu'elles soient chacune dans un plan passant par l'axe A2.

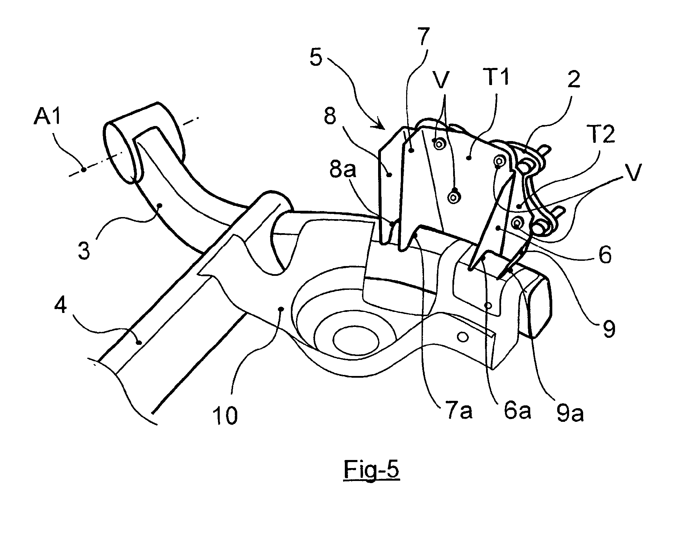

Dans les exemples des figures 1 à 3, chaque plaque flexible 6, 7, 8 est formée par un morceau de tôle distinct, mais avantageusement deux plaques telles que 6 et 7 peuvent être formées à partir d'une même tôle T1, comme dans les exemples représentés sur les figures 4 et 5. Ces figures donnent une représentation plus détaillée, en perspective, d'un train arrière selon l'invention, la roue 1 n'y étant pas représentée. Ce train arrière comprend une assise 10 réalisée en tôle emboutie et destinée à recevoir une extrémité d'un élément de suspension, cette assise 10 étant en appui à la fois sur le bras oscillant et sur la traverse 4. Dans ce mode de réalisation, la liaison flexible 5 est constituée par plusieurs pièces de tôle repérées par T1 et T2 incluant plusieurs plaques flexibles 6, 7, 8 dont les premiers bords 6a, 7a et 8a sont soudés au bras oscillant 3, la fusée de roue 2 étant fixée à cet ensemble par plusieurs vis. La tôle T1 qui est sensiblement rectangulaire a deux extrémités repliées à angle droit pour former les deux plaques flexibles 6 et 7, les premiers bords 6a et 7a de ces plaques flexibles étant soudés sur le bras oscillant 3. Compte tenu de l'angle formé par les plaques flexibles 6 et 7, la partie centrale de la tôle T1 définit un fond plan sensiblement trapézoïdal qui est situé dans un plan parallèle au plan de la roue et auquel est fixée la fusée de roue 2. Le nombre de pièces constitutives de la liaison flexible est réduit, ce qui diminue encore son coût de fabrication.

La tôle repliée T1 peut avantageusement être doublée pour augmenter la rigidité de la liaison flexible 5. Dans l'exemple des figures 4 et 5, deux tôles repliées T1 et T2 sont superposées l'une à l'autre pour constituer ensemble la liaison flexible 5. Plus particulièrement, le fond trapézoïdal de la première tôle T1 a de plus faibles dimensions que celui de la seconde tôle T2, de telle sorte que cette tôle T2 recouvre la première tôle T1, les fonds des deux tôles étant en appui l'un contre l'autre.

Dans l'exemple de la figure 4, un seul côté de la tôle T2 est replié à angle droit pour constituer une troisième plaque flexible 8 dont le premier bord 8a est soudé sur le bras oscillant 3. Les trois plaques flexibles 6, 7 et 8 sont positionnées de telle sorte qu'elles soient situées dans des plans incluant chacun un même axe A2, non représenté sur la figure 4, mais qui constitue l'axe de rotation de la liaison flexible 5.

La seconde tôle T2 peut aussi avoir deux de ses côtés repliés, comme dans l'exemple de la figure 5, afin de définir deux plaques flexibles pour augmenter encore la raideur de la liaison 5. De manière analogue, il est possible de prévoir trois tôles superposées les unes aux autres, dont les fonds sont en appui les uns sur les autres, et définissant autant de paires de plaques flexibles que nécessaire pour atteindre une raideur souhaitée. Comme visible sur les figures, il est ainsi possible d'atteindre une raideur de liaison importante dans un encombrement réduit, ce qui simplifie encore le dimensionnement de la liaison.

Dans l'exemple de la figure 5, deux côtés de la tôle T2 sont repliés de manière à former deux plaques flexibles 8 et 9 afin d'augmenter la rigidité de la liaison 5. Le bord replié qui est repéré par 9 a ici une faible hauteur, de manière à ne pas trop rigidifier la liaison 5. Il s'agit ici d'une possibilité supplémentaire pour ajuster la rigidité de la liaison : celle-ci peut également être modifiée en ajustant la hauteur des plaques qui conditionne leur flexibilité, et par suite la flexibilité de la liaison.

Comme visible sur les figures, la fusée de roue 2 est fixée au fond des tôles par quatre vis V de telle sorte que cette fixation reste classique et ne nécessite pas de modification de la chaîne de production. Dans le cas d'une liaison comprenant plusieurs tôles, la fusée de roue 2 est fixée à la liaison par des vis qui traversent toutes les tôles telles que T1 et T2 constitutives de la liaison 5, ce qui contribue à rigidifier encore cette liaison en solidarisant les fonds des tôles les uns aux autres.

## Revendications

1. Train arrière de véhicule automobile comprenant une fusée de roue (2), ce train arrière incluant une liaison flexible autorisant un mouvement de rotation de la fusée de roue (2) autour d'un axe de rotation (A2) distinct de l'axe de roue, cette liaison flexible comprenant au moins deux plaques flexibles (6, 7, 8, 9) sensiblement planes contenues dans deux plans distincts dont l'intersection coincide avec l'axe de rotation (A2), **caractérisé en ce qu'**il comprend un bras oscillant (3), la fusée de roue (2) étant fixée au bras oscillant (3) par cette liaison flexible, chaque plaque flexible (6, 7, 8, 9) ayant un premier bord rigidement fixé au bras oscillant (3) et un second bord rigidement fixé à la fusée de roue (2) et dans lequel les plaques flexibles sont orientées de telle sorte que l'axe de rotation (A2) de la liaison flexible (5) soit situé au niveau du sol ou sous le sol en étant orienté selon une direction transversale.

2. Train arrière selon la revendication 1, dans lequel la liaison flexible (5) comprend plusieurs plaques flexibles (6, 7, 8, 9) espacées le long du bras oscillant (3) ayant chacune un premier bord (6a, 7a , 8a, 9a) rigidement fixé au bras oscillant (3) et un second bord (6b, 7b) rigidement fixé à la fusée de roue (2), et dans lequel ces plaques flexibles (6, 7, 8, 9) sont disposées l'une par rapport à l'autre de manière à définir un V ouvert vers le haut.

3. Train arrière selon la revendication 2 dans lequel au moins l'une des plaques flexibles (6, 7, 8, 9) est rigidement fixée au bras oscillant (3) par soudage.

4. Train arrière selon l'une des revendications 1 à 3, dans lequel la liaison flexible (5) comprend une tôle (T1, T2) sensiblement rectangulaire ayant deux côtés pliés à angle droit, cette tôle pliée (T1, T2) définissant un fond trapézoïdal auquel est fixée la fusée de roue (2), les deux côtés pliés définissant chacun une plaque flexible (6, 7, 8, 9), chaque plaque flexible (6, 7, 8, 9) ayant son premier bord (6a, 7a, 8a, 9a) rigidement fixé au bras oscillant (3).

5. Train arrière selon la revendication 4, dans lequel la liaison flexible (5) est formée par plusieurs tôles (T1, T2) pliées superposées les unes aux autres, les fonds de chaque tôle (T1, T2) étant en appui les uns sur les autres.

6. Train arrière selon la revendication 4, comprenant une première tôle pliée (T1), et une seconde tôle pliée (T2) en appui sur la première tôle (T1), cette seconde tôle pliée (T2) ayant un seul côté formant une plaque flexible (9).

7. Train arrière selon la revendication 4 ou 6, dans lequel la fusée de roue (2) est fixée au fond de chaque tôle par plusieurs vis (v).

## Claims

1. Motor vehicle rear axle assembly comprising a wheel knuckle (2), this rear axle assembly including a flexible coupling allowing a rotational movement of the wheel knuckle (2) about an axis of rotation (A2) which is separate from the wheel axis, this flexible coupling comprising at least two substantially flat flexible plates (6, 7, 8, 9) contained within two separate planes whose intersection coincides with the axis of rotation (A2), **characterized in that** it comprises a swing arm (3), the wheel knuckle (2) being fastened to the swing arm (3) by this flexible coupling, each flexible plate (6, 7, 8, 9) having a first edge rigidly fastened to the swing arm (3) and a second edge rigidly fastened to the wheel knuckle (2) and wherein the flexible plates are oriented such that the axis of rotation (A2) of the flexible coupling (5) is situated at ground level or below the ground while being oriented in a transverse direction.

2. Rear axle assembly according to Claim 1, wherein the flexible coupling (5) comprises a plurality of flexible plates (6, 7, 8, 9) spaced along the swing arm (3) and each having a first edge (6a, 7a, 8a, 9a) rigidly fastened to the swing arm (3) and a second edge (6b, 7b) rigidly fastened to the wheel knuckle (2), and wherein these flexile plates (6, 7, 8, 9) are arranged with respect to one another so as to define an upwardly open V.

3. Rear axle assembly according to Claim 2, wherein at least one of the flexible plats (6, 7, 8, 9) is rigidly fastened to the swing arm (3) by welding.

4. Rear axle assembly according to one of Claims 1 to 3, wherein the flexible coupling (5) comprises a substantially rectangular metal sheet (T1, T2) having two sides folded at a right angle, this folded sheet (T1, T2) defining a trapezoidal base to which the wheel knuckle (2) is fastened, the two folded sides each defining a flexible plate (6, 7, 8, 9), each flexible plate (6, 7, 8, 9) having its first edge (6a, 7a, 8a, 9a) rigidly fastened to the swing arm (3).

5. Rear axle assembly according to Claim 4, wherein the flexible coupling (5) is formed by a plurality of folded sheets (T1, T2) placed on top of one another, the bases of each sheet (T1, T2) bearing against one another.

6. Rear axle assembly according to Claim 4, comprising a first folded sheet (T1) and a second folded sheet (T2) bearing on the first sheet (T1), this second folded sheet (T2) having only one side forming a flexible plate (9).

7. Rear axle assembly according to Claim 4 or 6, in which the wheel knuckle (2) is fastened to the base of each sheet by a plurality of bolts (V).

## Patentansprüche

1. Kraftfahrzeug-Hinterachse, die einen Achsbolzen (2) enthält, wobei diese Hinterachse eine flexible Verbindung aufweist, die eine Drehbewegung des Achsbolzens (2) um eine von der Radachse verschiedene Drehachse (A2) zulässt, wobei diese flexible Verbindung wenigstens zwei im Wesentliche ebene flexible Platten (6, 7, 8, 9) enthält, die in zwei verschiedenen Ebenen liegen, deren Schnittlinie mit der Drehachse (A2) zusammenfällt, **dadurch gekennzeichnet, dass** sie einen Lenker (3) enthält, wobei der Achsbolzen (2) an dem Lenker (3) durch diese flexible Verbindung befestigt ist, wobei jede flexible Platte (6, 7, 8, 9) einen ersten starren Rand, der an dem Lenker (3) befestigt ist, und einen zweiten starren Rand, der an dem Achsbolzen (2) befestigt ist, besitzt, wobei die flexiblen Platten in der Weise orientiert sind, dass sich die Drehachse (A2) der flexiblen Verbindung (5) auf Höhe des Bodens oder unter dem Boden befindet, wobei sie in einer transversalen Richtung orientiert ist.

2. Hinterachse nach Anspruch 1, wobei die flexible Verbindung (5) mehrere flexible Platten (6, 7, 8, 9) enthält, die längs des Lenkers (3) voneinander beabstandet sind und jeweils einen ersten Rand (6a, 7a, 8a, 9a), der an dem Lenker (3) starr befestigt ist, und einen zweiten Rand (6b, 7b), der an dem Achsbolzen (2) starr befestigt ist, besitzen, wobei diese flexiblen Platten (6, 7, 8, 9) relativ zueinander in der Weise angeordnet sind, dass ein nach oben offenes V definiert wird.

3. Hinterachse nach Anspruch 2, wobei wenigstens eine der flexiblen Platten (6, 7, 8, 9) an dem Lenker (3) durch Schweißen starr befestigt ist.

4. Hinterachse nach einem der Ansprüche 1 bis 3, wobei die flexible Verbindung (5) ein Blech (T1, T2) aufweist, das im Wesentlichen rechtwinklig ist und wovon zwei Seiten im rechten Winkel umgebogen sind, wobei dieses umgebogene Blech (T1, T2) einen trapezförmigen Boden definiert, an dem der Achsbolzen (2) befestigt ist, wobei die zwei umgebogenen Seiten jeweils eine flexible Platte (6, 7, 8, 9) definieren, wobei jede flexible Platte (6, 7, 8, 9) mit ihrem ersten Rand (6a, 7a, 8a, 9a) an dem Lenker (3) starr befestigt ist.

5. Hinterachse nach Anspruch 4, wobei die flexible Verbindung (5) aus mehreren umgebogenen Blechen (T1, T2) gebildet ist, die übereinander angeordnet sind, wobei sich die Böden der einzelnen Bleche (T1, T2) aneinander abstützen.

6. Hinterachse nach Anspruch 4, die ein erstes umgebogenes Blech (T1) und ein zweites umgebogenes Blech (T2), das sich am ersten Blech (T1) abstützt, aufweist, wobei dieses zweite umgebogene Blech (T2) eine einzige Seite besitzt, die eine flexible Platte (9) bildet.

7. Hinterachse nach Anspruch 4 oder 6, wobei der Achsbolzen (2) am Boden jedes Blechs durch mehrere Schrauben (V) befestigt ist.
